# EUROPEAN PATENT APPLICATION

(11) **EP 4 794 316 A1**
(43) Date of publication of application: **19.08.2026**
(21) Application number: 25197784.9
(22) Date of filing: 25.08.2025
(51) Int. Cl.: H04N 1/00, G03G 15/00

(54) **IMAGE FORMING CONTROL APPARATUS**

(30) Priority: 18.02.2025 JP 2025024507; 25.03.2025 JP 2025050661; 25.03.2025 JP 2025050774; 26.03.2025 JP 2025051735
(71) Applicant: FUJIFILM Business Innovation Corp., Minato-ku Tokyo (JP)
(72) Inventor: HORIKAWA, Kazuhiko, Yokohama-shi, Kanagawa (JP); SAKAMOTO, Masaomi, Yokohama-shi, Kanagawa (JP); TABATA, Shinji, Yokohama-shi, Kanagawa (JP); MATSUO, Kota, Yokohama-shi, Kanagawa (JP); YOKOHASHI, Mami, Yokohama-shi, Kanagawa (JP)
(74) Representative: Becker Kurig & Partner Patentanwälte mbB

(57) **Abstract**

An image forming control apparatus includes a processor configured to: acquire a measured value of characteristics of a recording medium used for image formation; acquire a predetermined reference value related to the characteristics of the recording medium; and execute control of outputting information corresponding to a difference between the measured value and the reference value.

## Description

### BACKGROUND OF THE INVENTION

### (i) Field of the Invention

The present invention relates to an image forming control apparatus.

### (ii) Description of Related Art

JP2022-72510A discloses a configuration in which a selection screen for selecting whether or not to permit an image forming section to form an image on a recording medium is displayed in a case where user instruction information related to a type of the recording medium does not match a detection result of a medium measurement device.

### SUMMARY OF THE INVENTION

In the recording medium used for image formation, characteristics of the recording medium may be changed depending on a temperature and humidity of a storage environment, compared to a new state of the recording medium. For example, electrical characteristics of the recording medium are changed by opening a sealed recording medium and absorbing moisture in outside air. Then, the change in the electrical characteristics of the recording medium causes a transfer failure, and an image defect such as roughness of a toner or rubbing of the toner occurs.

An object of the present disclosure is to provide an image forming control apparatus that suppress occurrence of an image defect due to a change in characteristics of a recording medium or formation of an image having the image defect due to the change in the characteristics of the recording medium.

According to a first aspect of the present disclosure, there is provided an image forming control apparatus including: a processor configured to: acquire a measured value of characteristics of a recording medium used for image formation; acquire a predetermined reference value related to the characteristics of the recording medium; and execute control of outputting information corresponding to a difference between the measured value and the reference value.

According to a second aspect of the present disclosure, there is provided the image forming control apparatus according to the first aspect, in which the information may be information indicating a state of the recording medium for which the measured value is obtained, and the processor may be configured to: execute control of outputting the information to a user.

According to a third aspect of the present disclosure, there is provided the image forming control apparatus according to the second aspect, in which the information indicating the state of the recording medium may be information indicating whether or not the recording medium is in a state that causes an image forming failure.

According to a fourth aspect of the present disclosure, there is provided the image forming control apparatus according to any one of the first to third aspects, in which the information may be any one of display indicating that there is no problem in the image formation, display of a warning of image formation prohibition, or display of a recommendation for changing image formation settings.

According to a fifth aspect of the present disclosure, there is provided the image forming control apparatus according to the fourth aspect, in which the processor may be configured to: execute control of outputting change information in a case where the recommendation for changing the image formation settings is output as the information, in a case where a difference between the measured value and the reference value is greater than a state of the display indicating that there is no problem in the image formation and is less than a state of the display of the warning of the image formation prohibition.

According to a sixth aspect of the present disclosure, there is provided the image forming control apparatus according to the first aspect, in which the processor may be configured to: execute control of notifying a user of information on whether or not measurement of a value related to the characteristics of the recording medium is necessary based on a predetermined condition.

According to a seventh aspect of the present disclosure, there is provided the image forming control apparatus according to the sixth aspect, in which the predetermined condition may be at least one of an environmental condition, a measurement period, or a usage status of the user.

According to the first aspect of the present disclosure, the occurrence of the image defect due to the change in the characteristics of the recording medium or the formation of the image having the image defect due to the change in the characteristics of the recording medium may be suppressed.

According to the second aspect of the present disclosure, the user may check the state of the recording medium and determine whether or not to perform the image formation.

According to the third aspect of the present disclosure, the user may check whether or not the recording medium has a sign of the occurrence of the image forming failure before performing the image formation.

According to the fourth aspect of the present disclosure, the user may take measures corresponding to the state of the recording medium through the display indicating that there is no problem in the image formation, the display of the warning of the image formation prohibition, and the display of the recommendation for changing the image formation settings.

According to the fifth aspect of the present disclosure, in a case where the reference value and the measured value are separated within a range that does not lead to the image formation prohibition, the problem may be handled by changing the setting of the image formation.

According to the sixth aspect of the present disclosure, in a case where the measurement of the characteristic value of the recording medium is required, the user may be prompted to perform the measurement.

According to the seventh aspect of the present disclosure, the user may be efficiently prompted to perform the measurement in a case where the characteristics of the recording medium are changed.

### BRIEF DESCRIPTION OF THE DRAWINGS

Exemplary embodiment(s) of the present invention will be described in detail based on the following figures, wherein:
FIG. 1 is a diagram showing an image forming control apparatus to which the present exemplary embodiment is applied;
FIG. 2 is a diagram showing a medium measurement device;
FIG. 3 is a hardware configuration of a control section and the medium measurement device;
FIG. 4 is a functional configuration diagram of the control section;
FIG. 5 is a flowchart showing a flow of processing of the control section in first measurement;
FIG. 6 is a flowchart showing a flow of processing of the control section in measurement of paper in a case of performing image formation;
FIGS. 7A and 7B are diagrams showing display screens displayed on a UI in the first measurement;
FIGS. 8A and 8B are diagrams showing a display screen in measurement in a case of performing the image formation; and
FIGS. 9A to 9C are display screens showing measurement results in the measurement in a case of performing the image formation.

### DETAILED DESCRIPTION OF THE INVENTION

### [Description of Image Forming Control Apparatus]

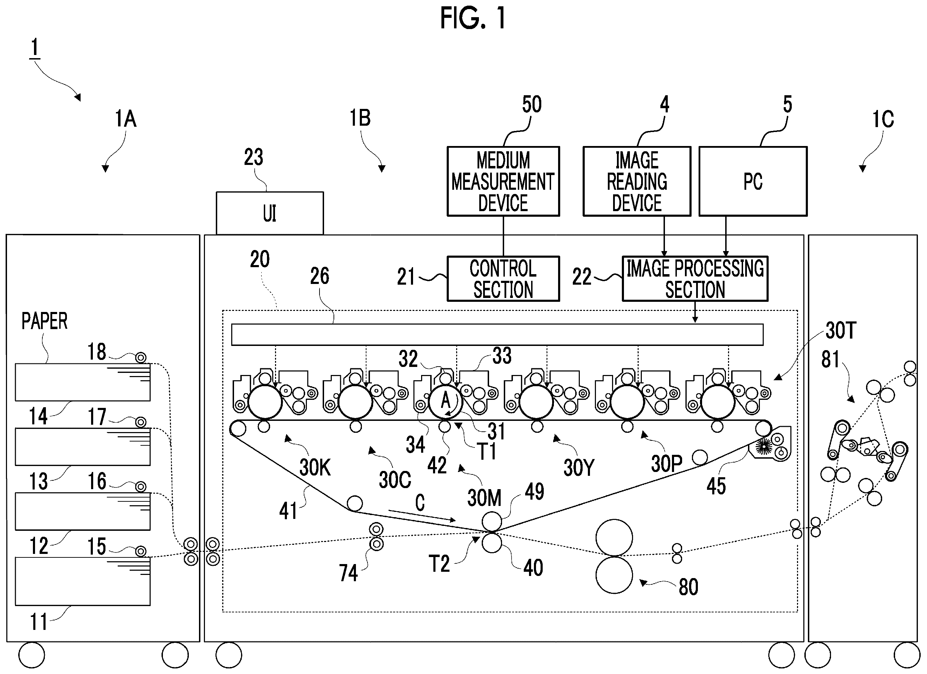

FIG. 1 is a diagram showing an image forming control apparatus 1 to which the present exemplary embodiment is applied.

The image forming control apparatus 1 according to the present exemplary embodiment includes a paper feeding unit 1A, a printing unit 1B, and a paper discharge unit 1C.

The paper feeding unit 1A includes a first paper accommodation section 11 to a fourth paper accommodation section 14 that accommodate paper. In the present exemplary embodiment, paper is used as an example of a recording medium, but, for example, a sheet-like recording medium such as a metal or resin film may be used.

In addition, the paper feeding unit 1A is provided with feed-out rolls 15 to 18 that are provided corresponding to the first paper accommodation section 11 to the fourth paper accommodation section 14 and that feed the paper accommodated in each paper accommodation section to a transport path connected to the printing unit 1B.

In addition, the image forming control apparatus 1 is provided with a medium measurement device 50 that measures characteristics of the paper, outside the image forming control apparatus 1. The medium measurement device 50 may be provided inside the image forming control apparatus 1. For example, the medium measurement device 50 may be provided in the paper feeding unit 1A or may be provided in the transport path of the paper.

The printing unit 1B includes an image forming section 20 that forms the image on the paper. In addition, the printing unit 1B is provided with a control section 21 that controls the sections of the image forming control apparatus 1.

In addition, the printing unit 1B includes an image processing section 22. The image processing section 22 performs image processing on image data transmitted from an image reading device 4 or the personal computer (PC) 5.

In addition, a user interface (UI) 23 that is configured with a touch panel or the like and that notifies a user of information and receives information input from the user is provided in the printing unit 1B.

Six image forming units 30T, 30P, 30Y, 30M, 30C, and 30K (hereinafter, may be simply referred to as "image forming units 30") disposed parallel to each other at constant intervals are provided in the image forming section 20.

Each image forming unit 30 includes a photosensitive drum 31 on which an electrostatic latent image is formed while rotating in an arrow A direction, a charging roll 32 that charges a surface of the photosensitive drum 31, a developing device 33 that develops the electrostatic latent image formed on the photosensitive drum 31, and a drum cleaner 34 that removes a toner or the like on the surface of the photosensitive drum 31.

The image forming section 20 is provided with an exposure device 26 that exposes each photosensitive drum 31 of each image forming unit 30 with laser light.

The exposure of the photosensitive drum 31 by the exposure device 26 is not limited to using the laser light. For example, each image forming unit 30 may be provided with a light source such as a light emitting diode (LED), and the exposure of the photosensitive drum 31 may be performed with light emitted from the light source.

Each image forming unit 30 has the same configuration except for the toner contained in the developing device 33. The image forming units 30Y, 30M, 30C, and 30K form toner images of yellow (Y), magenta (M), cyan (C), and black (K), respectively.

In addition, the image forming units 30T and 30P form toner images using toners such as corporate-color toners, foaming toner for Braille, fluorescent-color toners, and toners that enhance glossiness. In other words, the image forming units 30T and 30P form toner images using a special-color toner.

In addition, the image forming section 20 is provided with an intermediate transfer belt 41 to which the toner image of each color formed on the photosensitive drum 31 of each image forming unit 30 is transferred.

In addition, the image forming section 20 is provided with a primary transfer roll 42 that transfers each color toner image of each image forming unit 30 onto the intermediate transfer belt 41 at a primary transfer section T1.

In addition, the image forming section 20 is provided with a secondary transfer roll 40 that collectively transfers the toner image transferred on the intermediate transfer belt 41 onto the paper by a secondary transfer section T2.

Further, the image forming section 20 is provided with a belt cleaner 45 that removes the toner or the like on the surface of the intermediate transfer belt 41, and a fixing device 80 that fixes the image secondary-transferred on the paper.

The image forming section 20 performs an image forming operation based on a control signal from the control section 21.

Specifically, in the image forming section 20, first, the image processing is performed on the image data, which is input from the image reading device 4 or the PC 5, by the image processing section 22, and the image data after the image processing is performed is supplied to the exposure device 26.

For example, in the image forming unit 30M of magenta (M), after the surface of the photosensitive drum 31 is charged by the charging roll 32, the photosensitive drum 31 is irradiated with the laser light modulated by the image data obtained from the image processing section 22 by the exposure device 26.

As a result, the electrostatic latent image is formed on the photosensitive drum 31.

The formed electrostatic latent image is developed by the developing device 33, and the toner image of magenta is formed on the photosensitive drum 31.

Similarly, the toner images of yellow, cyan, and black are formed in the image forming units 30Y, 30C, and 30K, and the toner image of the special color is formed in the image forming units 30T and 30P.

Each color toner image formed in each image forming unit 30 is sequentially electrostatically transferred onto the intermediate transfer belt 41 rotating in an arrow C direction in FIG. 1 by the primary transfer roll 42, and thus a superimposed toner image is formed on the intermediate transfer belt 41.

The superimposed toner image formed on the intermediate transfer belt 41 is transported to the secondary transfer section T2 that is configured with the secondary transfer roll 40 and a backup roll 49, as the intermediate transfer belt 41 is moved.

Meanwhile, the paper is taken out from the first paper accommodation section 11 by, for example, the feed-out roll 15, and then transported to a position of a registration roll 74 via the transport path.

In a case where the superimposed toner image is transported to the secondary transfer section T2, the paper is supplied from the registration roll 74 to the secondary transfer section T2 in accordance with the transport timing.

Then, at the secondary transfer section T2, the superimposed toner image is electrostatically transferred all at once onto the paper by an effect of a transfer electric field formed between the secondary transfer roll 40 and the backup roll 49.

Then, the paper on which the superimposed toner image is electrostatically transferred is transported to the fixing device 80.

In the fixing device 80, the paper on which the unfixed toner image is formed is pressurized and heated, and fixing processing of the toner image on the paper is performed.

The paper on which the fixing processing is performed passes through a curl correction section 81 provided in the paper discharge unit 1C and is then transported to a paper stacking section (not shown).

### [Description of Medium Measurement Device 50]

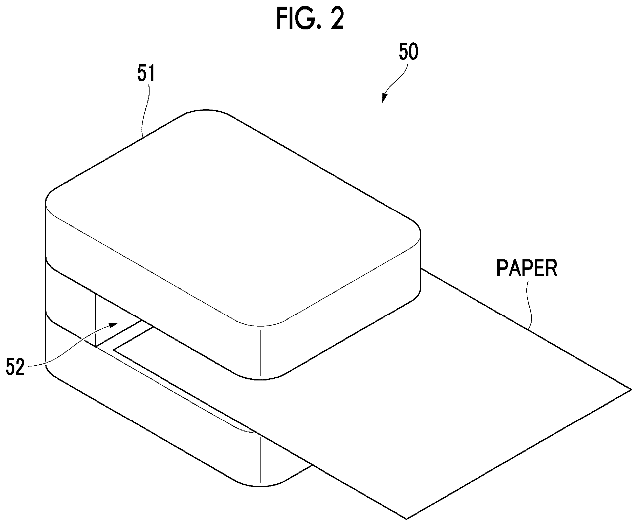

FIG. 2 is a diagram showing the medium measurement device 50. The medium measurement device 50 is configured as a compact box-integrated device including a housing 51 having a plurality of sensors for measuring the characteristics of the paper and a gap 52 for inserting the paper. The medium measurement device 50 measures the characteristics of the paper inserted in the gap 52. For example, the housing 51 of the medium measurement device 50 includes an electrical resistance sensor, an ultrasonic sensor, a reflective sensor, a transmissive sensor, and an RGB sensor. Then, the electrical resistance sensor measures an electrical resistance of the paper. In addition, the ultrasonic sensor measures a basis weight of the paper. In addition, the reflective sensor measures reflected light of the paper. Further, the transmissive sensor measures transmitted light of the paper. Furthermore, the RGB sensor estimates the color of the paper. That is, examples of the characteristics of the paper include electrical characteristics such as the electrical resistance of the paper, physical characteristics such as the basis weight, and other characteristics such as the reflected light, the transmitted light, and the color.

Then, the medium measurement device 50 outputs a measured value of the characteristics of the paper by each sensor included in the housing 51 as a measured value to the control section 21 (see FIG. 1). For example, in a case where the electrical resistance of the paper is measured, a value in which the unit is Ω is output as the measured value to the control section 21. In addition, for example, in a case where the basis weight of the paper is measured, a value in which g/m² is used as a unit is output as the measured value to the control section 21.

Here, the electrical resistance of the paper, the basis weight of the paper, and the like are properties of the paper that affect a state of the paper. The properties of the paper that affect the state of the paper are mostly properties that are changed by the paper absorbing moisture from the outside air, and are properties that cause an image forming failure due to a transfer failure or the like. For example, in a case where the paper in a state of being opened from a sealed state is stored in a high temperature and high humidity environment, the electrical resistance of the paper is decreased and the basis weight of the paper is increased in a case where a certain period of time has elapsed from a state immediately after opening, as compared with the state immediately after opening. As a result, the failure of the electrostatic transfer by the secondary transfer section T2 is more likely to occur in a case where a certain period of time has elapsed from the state immediately after opening, as compared with the state immediately after opening.

### [Hardware Configuration]

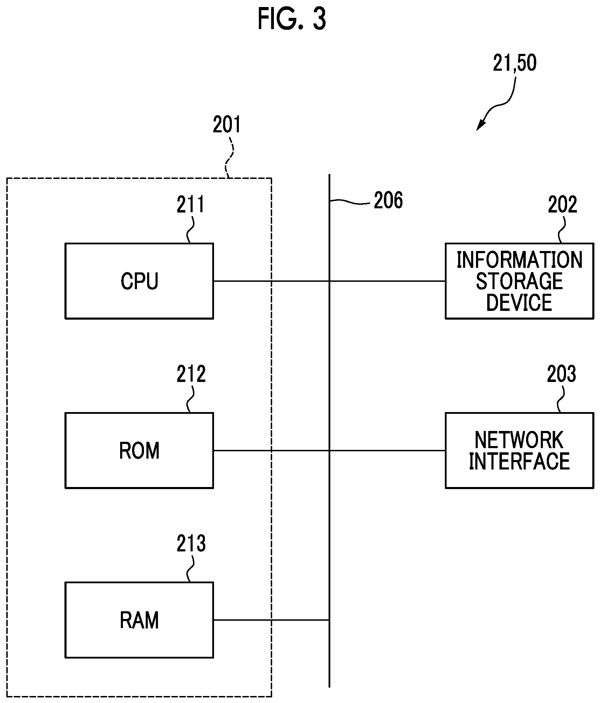

FIG. 3 shows a hardware configuration of the control section 21 and the medium measurement device 50. As shown in FIG. 3, a computer that implements the control section 21 and the medium measurement device 50 includes a processing section 201 that executes digital arithmetic processing in accordance with a program, an information storage device 202 that stores information, and a network interface 203 that realizes communication via a local area network (LAN) cable or the like.

The processing section 201 is configured by a computer. The processing section 201 includes a central processing unit (CPU) 211 as an example of a processor that executes various types of processing. In addition, the processing section 201 includes a read-only memory (ROM) 212 in which a program is stored and a random-access memory (RAM) 213 used as a work area. The information storage device 202 is implemented using existing devices such as a hard disk drive, a semiconductor memory, and a magnetic tape. The processing section 201, the information storage device 202, and the network interface 203 are connected through a bus 206 or a signal line (not shown).

The program executed by the CPU 211 may be provided to the control section 21 in a state in which the program is stored in a computer-readable recording medium such as a magnetic recording medium (magnetic tape, magnetic disk, or the like), an optical recording medium (optical disk or the like), an optical magnetic recording medium, or a semiconductor memory. In addition, the program executed by the CPU 211 may be provided to the control section 21 using communication means such as the Internet.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### [Functional Configuration of Control Section 21]

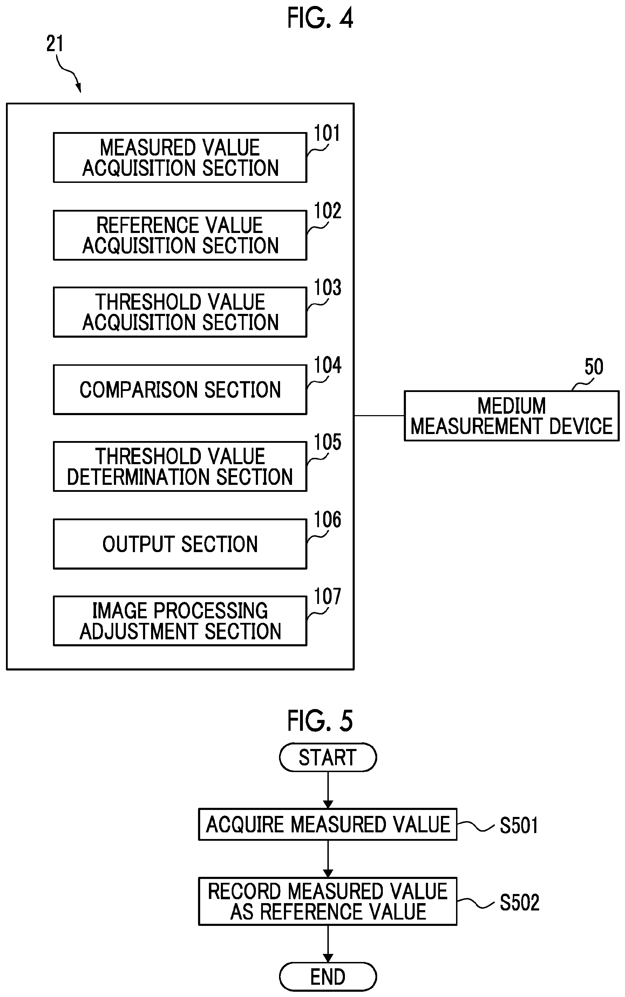

FIG. 4 is a functional configuration diagram of the control section 21. The control section 21 includes a measured value acquisition section 101 that acquires a measured value, which is a value obtained by measuring the characteristics of the paper, from the medium measurement device 50. **In** addition, the control section 21 includes a reference value acquisition section 102 that acquires a reference value that is a predetermined value with respect to the characteristics of the paper. **In** addition, the control section 21 includes a threshold value acquisition section 103 that acquires a threshold value that is a value for distinguishing the state of the paper. **In** addition, the control section 21 includes a comparison section 104 that compares the measured value with the reference value. **In** addition, the control section 21 includes a threshold value determination section 105 that determines whether or not a value obtained by comparison by the comparison section 104 exceeds a threshold value. **In** addition, the control section 21 includes an output section 106 that outputs information corresponding to a difference between the measured value and the reference value to the user depending on whether or not the value exceeds the threshold value. **In** addition, the control section 21 includes an image processing adjustment section 107 that adjusts the image processing by the image processing section 22 depending on whether or not the value exceeds the threshold value.

The reference value acquired by the reference value acquisition section 102 is a measured value of the paper in a state in which the characteristics of the paper are not changed. In the present exemplary embodiment, a measured value of the paper immediately after being opened from the sealed state is used as the reference value. The reference value may be a value input by the user with reference to a catalog value of paper at the time of shipment from the factory.

### [Flow of Processing of Control Section 21]

FIG. 5 is a flowchart showing a flow of processing of the control section 21 in first measurement. The first measurement is measurement for recording the reference value in the paper that is an inspection target in the reference value acquisition section 102. The paper that is the inspection target is paper used for the image formation. First, the measured value acquisition section 101 of the control section 21 acquires the measured value of the paper immediately after being opened from the sealed state from the medium measurement device 50 (step S501). Then, this measured value is recorded as the reference value (step S502). Thereafter, the control section 21 ends the processing.

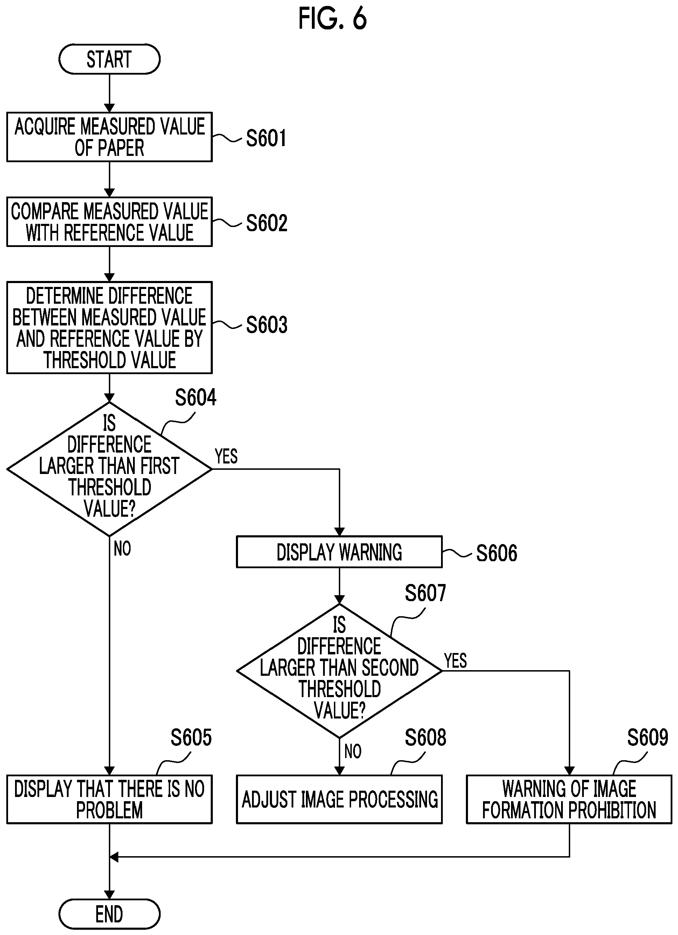

FIG. 6 is a flowchart showing a flow of processing of the control section 21 in measurement of paper in a case of performing image formation. The measurement of the paper in a case of performing the image formation is measurement for determining whether or not the paper that is the inspection target can be used for the image formation without any problem. In the present exemplary embodiment, the threshold value acquisition section 103 acquires a first threshold value and a second threshold value as the threshold values. The first threshold value is a value for determining whether or not there is a problem in the image formation even in a case where the characteristics of the paper are changed. The second threshold value is a value for determining whether or not the change in the characteristics of the paper can be handled by the adjustment of the image processing. The first threshold value is set to, for example, a value such that a difference between the first threshold value and the reference value is 5% of the entire reference value. The second threshold value is set to, for example, a value such that a difference between the second threshold value and the reference value is 15% of the entire reference value.

As shown in FIG. 6, first, the measured value acquisition section 101 of the control section 21 acquires the measured value of the paper that is the inspection target (step S601). The comparison section 104 compares the measured value with the reference value acquired in step S501 (step S602). Thereafter, the threshold value determination section 105 determines the difference between the reference value and the measured value by the first threshold value and the second threshold value (step S603).

In a case where the difference between the reference value and the measured value is less than the difference between the reference value and the first threshold value (NO in step S604), the output section 106 causes the UI 23 to display that there is no problem to the user (step S605). The display indicating no problem is information indicating that the paper is in a state that does not cause the image forming failure. In a case where the difference between the reference value and the measured value is greater than the difference between the reference value and the first threshold value (YES in step S604), the output section 106 causes the UI 23 to display a warning (step S606). This display of the warning is information indicating a state in which a specific change in the paper may cause the image forming failure. In a case where the difference between the reference value and the measured value is the same as the difference between the reference value and the first threshold value, the display indicating that there is no problem may be performed with respect to the user, or the display of the warning may be performed with respect to the user.

Then, in a case where the difference between the reference value and the measured value is greater than the difference between the reference value and the first threshold value and is less than a difference between the reference value and the second threshold value (NO in step S607), the image processing adjustment section 107 automatically performs the adjustment of the image processing (step S608). Examples of the adjustment of the image processing include changing the transfer voltage of the electrostatic transfer by the secondary transfer section T2 to increase the transfer voltage. In step S608, the image processing may be adjusted in a case where a recommendation for changing an image formation settings is displayed to the user, and the user gives an instruction to change the image formation settings. The adjustment information of the image processing and the display of the recommendation for changing the image formation settings are information indicating that the paper is in a state that causes the image forming failure but is in a state in which the image forming failure can be handled by the adjustment of the image processing. The adjustment information of the image processing and the display of the recommendation for changing the image formation settings are information that is output in a case where the difference between the measured value and the reference value is greater than a state of the paper in which the display indicating that there is no problem in the image formation is performed and is less than a state of the paper in which the warning of the image formation prohibition is displayed.

Then, in a case where the difference between the reference value and the measured value is greater than the difference between the reference value and the second threshold value (YES in step S607), the output section 106 causes the UI 23 to display a warning of the image formation prohibition (step S609). The display of the warning of the image formation prohibition is information indicating that the paper is in a state that causes the image forming failure and in which the image processing adjustment cannot be handled. As described above, the control section 21 outputs any one information of the display indicating that there is no problem in the image formation, the display of the warning of the image formation prohibition, or the display of the recommendation for changing the image formation settings. In a case where the difference between the reference value and the measured value is the same as the difference between the reference value and the second threshold value, the display of the warning of the image formation prohibition is performed with respect to the user, or the display of the recommendation for changing the image formation settings may be performed with respect to the user.

The values of the first threshold value and the second threshold value described in FIG. 6 may be changed in accordance with the type of the paper. For example, in a case of paper that is easily affected by moisture, such as the coated paper, the first threshold value may be set to, for example, a value such that the difference between the first threshold value and the reference value is 2% of the entire reference value. In addition, for example, in a case of paper that is less likely to be affected by moisture, such as rough paper, the first threshold value may be set to, for example, a value such that the difference between the first threshold value and the reference value is 10% of the entire reference value.

The measurement in a case of performing the image formation described in FIG. 6 does not need to be performed each time the image formation is performed, and the measurement in a case of performing the image formation may be performed only in a case where the user checks the notification in a case of performing the image formation. The control section 21 notifies the user of information indicating whether or not the measurement of the value related to the characteristics of the paper is necessary based on predetermined information by the UI 23. The predetermined condition is a condition in which the change in the characteristics of the paper is estimated to occur.

Examples of the condition in which the change in the characteristics of the paper is estimated to occur include an environmental condition, a measurement period, and a usage status of the user. The environmental condition is a condition for an environment in which the paper is stored, and examples thereof include humidity. For example, in a case where the humidity in which the paper is stored is greater than a predetermined value, the control section 21 notifies the user of information indicating whether or not the measurement of the value related to the characteristics of the paper is necessary. The measurement period is an interval from a time when the first measurement or the measurement in a case of the image formation is performed to a time when the measurement in a case of performing the image formation is performed again. For example, in a case where a certain period has elapsed from the measurement period, the control section 21 notifies the user of information indicating whether or not the measurement of the value related to the characteristics of the paper is necessary. Examples of the usage status of the user include replenishment of the paper in the first paper accommodation section 11 to the fourth paper accommodation section 14 by the user. In the present exemplary embodiment, the user is notified of the information indicating whether or not the measurement of the value related to the characteristics of the paper is necessary based on at least any one condition of the environmental condition, the measurement period, or the usage status of the user.

### [Display Screen]

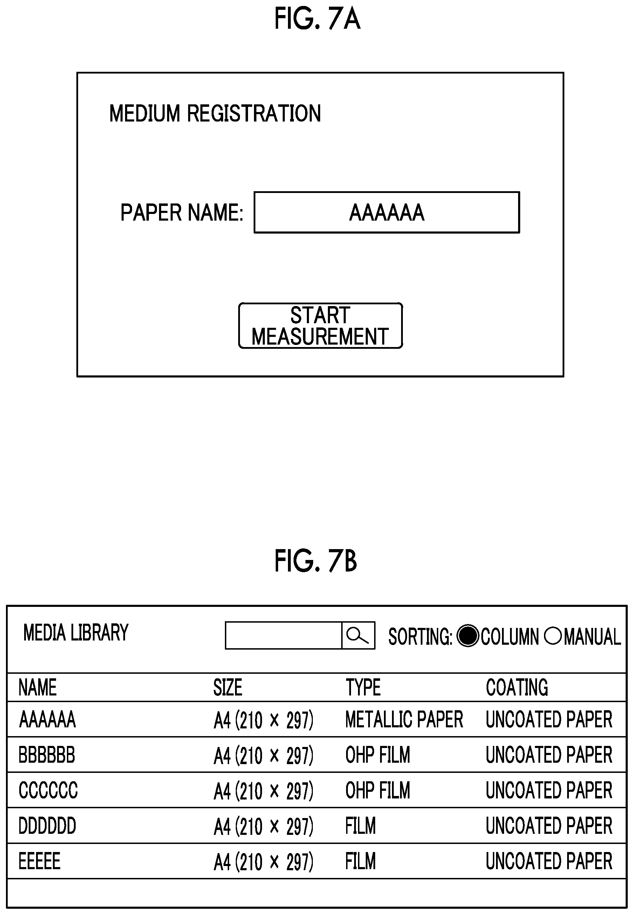

FIGS. 7A and 7B are diagrams showing display screens displayed on the UI 23 in the first measurement. FIG. 7A is a diagram showing a screen for registering a paper name, and FIG. 7B is a diagram showing a list of paper registered as reference data. In FIG. 7A, "AAAAAA" is input as the paper name by the user. Then, in FIG. 7A, in a case where the user presses a "start measurement" button, the measurement of the paper is started by the medium measurement device 50. In a case where the measurement by the medium measurement device 50 is completed, the measured value acquisition section 101 acquires the measured value. Then, the reference value acquisition section 102 registers the acquired measured value and the information on the paper in association with each other as the reference data. The information on the paper is information on a name, a size, and a type of the paper, and whether or not the paper is the coated paper. For example, on the screen of FIG. 7B, "AAAAAA" is registered as the paper name, "A4 (210 × 297)" is registered as the size of the paper, "metallic paper" is registered as the type of the paper, and "uncoated paper" is registered as the coating of the paper. In a case where the user presses the each paper name, the measured value corresponding to the paper is displayed as the reference value. On the screen of FIG. 7B, the measured value corresponding to the paper may be displayed. In addition, the information on the paper may be acquired by the input of the user, or may be acquired based on the measured value of the medium measurement device 50.

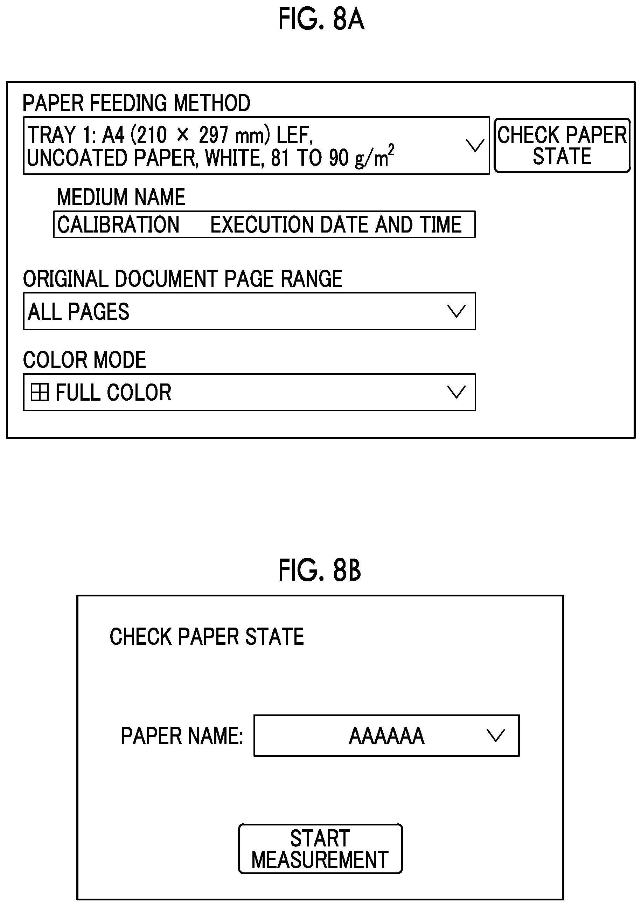

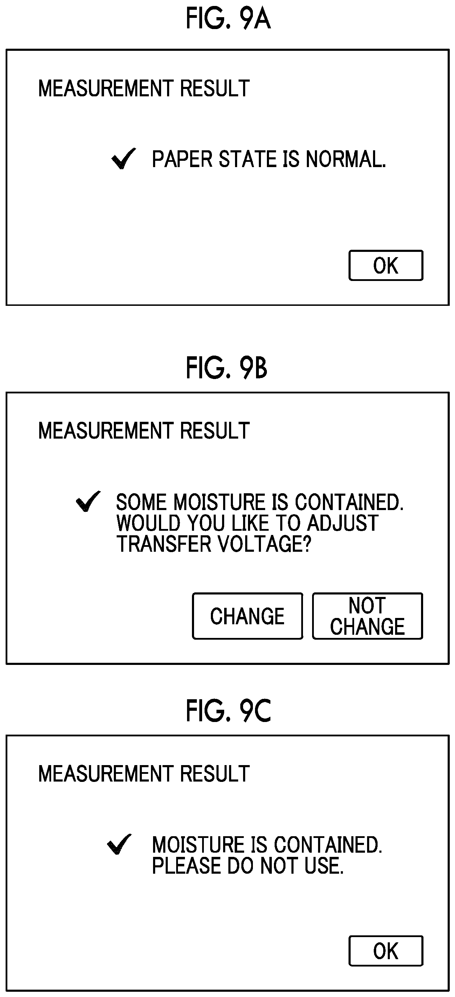

A display screen displayed on the UI 23 in the measurement in a case of performing the image formation will be described with reference to FIGS. 8 and 9. FIGS. 8A and 8B are diagrams showing a flow of a display screen in measurement in a case of performing the image formation. FIG. 8A is a printing setting screen showing the printing setting. FIG. 8B is a check screen before measuring the state of the paper. FIGS. 9A to 9C are display screens showing measurement results in the measurement in a case of performing the image formation. FIG. 9A is a screen for displaying that there is no problem in the image formation, FIG. 9B is a screen for displaying the recommendation for changing the image formation settings, and FIG. 9C is a screen for displaying the warning of the image formation prohibition.

In FIG. 8A, "tray 1: A4 (210 × 297 mm) LEF, uncoated paper, white, 81 to 90 g/m²" displayed below "paper feeding method" is information on the paper accommodated in the first paper accommodation section 11. Then, in a case where the user presses "check paper state" displayed in FIG. 8A, as shown in FIG. 8B, a "paper name" button and a "start measurement" button are displayed. In the field of "paper name", the paper name registered in FIG. 7B can be selected by the user. Then, in a case where the user selects "AAAAAA" as the paper name corresponding to the paper accommodated in the first paper accommodation section 11 and presses the "start of measurement" button, the measurement of the paper by the medium measurement device 50 is started. Then, in a case where the measurement by the medium measurement device 50 is completed, the measured value acquisition section 101 acquires the measured value. Then, the comparison section 104 compares the measured value with the reference value. The reference value in this case is a reference value corresponding to the paper name "AAAAAA".

Then, in a case where the comparison between the measured value and the reference value by the comparison section 104 is completed, the screen shown in FIGS. 9A to 9C is displayed on the UI 23 in accordance with the determination by the threshold value determination section 105 described in FIG. 6. Specifically, in a case where the difference between the reference value and the measured value is less than the difference between the reference value and the first threshold value, a screen on which "paper state is normal" is described as shown in FIG. 9A is displayed on the UI 23. In addition, in a case where the difference between the reference value and the measured value is greater than the difference between the reference value and the first threshold value and is less than the difference between the reference value and the second threshold value, a screen on which "Some moisture is contained. Would you like to adjust the transfer voltage?" is described as shown in FIG. 9B is displayed on the UI 23. In this case, in a case where "change" is pressed, the transfer voltage is adjusted. In addition, in a case where the difference between the reference value and the measured value is greater than the difference between the reference value and the second threshold value, a screen on which "Moisture is contained. Please do not use." is described as shown in FIG. 9C is displayed on the UI 23.

### <Supplementary Note>

(((1))) An image forming control apparatus comprising:
   a processor configured to:
   acquire a measured value of characteristics of a recording medium used for image formation;
   acquire a predetermined reference value related to the characteristics of the recording medium; and
   execute control of outputting information corresponding to a difference between the measured value and the reference value.
(((2))) The image forming control apparatus according to (((1))),
   wherein the information is information indicating a state of the recording medium for which the measured value is obtained, and
   the processor is configured to:
      execute control of outputting the information to a user.
(((3))) The image forming control apparatus according to (((2))),
   wherein the information indicating the state of the recording medium is information indicating whether or not the recording medium is in a state that causes an image forming failure.
(((4))) The image forming control apparatus according to any one of (((1))) to (((3))),
   wherein the information is any one of display indicating that there is no problem in the image formation, display of a warning of image formation prohibition, or display of a recommendation for changing image formation settings.
(((5))) The image forming control apparatus according to (((4))),
   wherein the processor is configured to:
   execute control of outputting change information in a case where the recommendation for changing the image formation settings is output as the information, in a case where a difference between the measured value and the reference value is greater than a state of the display indicating that there is no problem in the image formation and is less than a state of the display of the warning of the image formation prohibition.
(((6))) The image forming control apparatus according to (((1))),
   wherein the processor is configured to:
   execute control of notifying a user of information on whether or not measurement of a value related to the characteristics of the recording medium is necessary based on a predetermined condition.
(((7))) The image forming control apparatus according to (((6))),
   wherein the predetermined condition is at least one of an environmental condition, a measurement period, or a usage status of the user.

With the image forming control apparatus according to (((1))), the occurrence of the image defect due to the change in the characteristics of the recording medium or the formation of the image having the image defect due to the change in the characteristics of the recording medium may be suppressed.

With the image forming control apparatus according to (((2))), the user may check the state of the recording medium and determine whether or not to perform the image formation.

With the image forming control apparatus according to (((3))), the user may check whether or not the recording medium has a sign of the occurrence of the image forming failure before performing the image formation.

With the image forming control apparatus according to (((4))), the user may take measures corresponding to the state of the recording medium through the display indicating that there is no problem in the image formation, the display of the warning of the image formation prohibition, and the display of the recommendation for changing the image formation settings.

With the image forming control apparatus according to (((5))), in a case where the reference value and the measured value are separated within a range that does not lead to the image formation prohibition, the problem may be handled by changing the setting of the image formation.

With the image forming control apparatus according to (((6))), in a case where the measurement of the characteristic value of the recording medium is required, the user may be prompted to perform the measurement.

With the image forming control apparatus according to (((7))), the user may be efficiently prompted to perform the measurement in a case where the characteristics of the recording medium are changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

21: control section
50: medium measurement device
101: measured value acquisition section
102: reference value acquisition section
103: threshold value acquisition section
104: comparison section
105: threshold value determination section
106: output section
107: image processing adjustment section

## Claims

1. An image forming control apparatus comprising:
a processor configured to:
acquire a measured value of characteristics of a recording medium used for image formation;
acquire a predetermined reference value related to the characteristics of the recording medium; and
execute control of outputting information corresponding to a difference between the measured value and the reference value.

2. The image forming control apparatus according to claim 1,
wherein the information is information indicating a state of the recording medium for which the measured value is obtained, and
the processor is configured to:
execute control of outputting the information to a user.

3. The image forming control apparatus according to claim 2,
wherein the information indicating the state of the recording medium is information indicating whether or not the recording medium is in a state that causes an image forming failure.

4. The image forming control apparatus according to any one of claims 1 to 3, wherein the information is any one of display indicating that there is no problem in the image formation, display of a warning of image formation prohibition, or display of a recommendation for changing image formation settings.

5. The image forming control apparatus according to claim 4,
wherein the processor is configured to:
execute control of outputting change information in a case where the recommendation for changing the image formation settings is output as the information, in a case where a difference between the measured value and the reference value is greater than a state of the display indicating that there is no problem in the image formation and is less than a state of the display of the warning of the image formation prohibition.

6. The image forming control apparatus according to claim 1,
wherein the processor is configured to:
execute control of notifying a user of information on whether or not measurement of a value related to the characteristics of the recording medium is necessary based on a predetermined condition.

7. The image forming control apparatus according to claim 6,
wherein the predetermined condition is at least one of an environmental condition, a measurement period, or a usage status of the user.
